# EUROPEAN PATENT SPECIFICATION

(11) **EP 0 460 788 B1**
(45) Date of publication and mention of the grant of the patent: **02.05.1997**
(21) Application number: 91300985.8
(22) Date of filing: 06.02.1991
(51) Int. Cl.: B29C 49/20, B29C 49/42, B29C 49/36

(54) **Process and apparatus for preparation of synthetic resin vessel having handle**
Verfahren und Vorrichtung zum Herstellen eines Kunststoffbehälters mit einem Griff
Procédé et dispositif pour la fabrication d'un récipient en résine synthétique muni d'une anse

(30) Priority: 04.06.1990 JP 145863/90
(43) Date of publication of application: 11.12.1991
(73) Proprietor: TOYO SEIKAN KAISHA LIMITED, Tokyo (JP)
(72) Inventor: Yoshino, Minoru, Hiki-gun, Saitama-ken (JP); Yasuda, Yosuke, Shinagawa-ku, Tokyo (JP); Kishida, Nobuhiro, Kawasaki-shi, Kanagawa-ken (JP)
(74) Representative: Woodcraft, David Charles

(56) References cited:
- EP-A- 0 336 988
- US-A- 4 582 474
- PATENT ABSTRACTS OF JAPAN vol. 014, no. 181 (M-961) 11 April 1990 & JP-A-20 32 950 (TOYO SEIKAN KAISHA LTD)

## Description

### Background of the Invention

### (1) Field of the Invention

The present invention relates to a process and apparatus for the preparation of a synthetic resin vessel having a handle. More particularly, the present invention relates to a process and apparatus for preparing a synthetic resin vessel having a handle, comprising a vessel proper prepared by blow-forming or draw-blow-forming of a synthetic resin and a handle prepared independently from the vessel proper but secured to the vessel proper, at a high productivity without any loss time.

### (2) Description of the Related Art

Plastic hollow vessels have light weight and excellent impact resistance. Accordingly, they are is widely used as a container for various liquids. Especially, a hollow vessel obtained by blow-draw-forming of polyethylene terephthalate (hereinafter referred to as "PET") has a high transparency, good gas-barrier property, light weight, excellent impact resistance and an appropriate rigidity in combination, and is widely used as a packaging container for storing a liquid content therein.

In the case of a draw-blow-formed vessel of this type having a large size, in order to facilitate handling, it is desired to attach a handle to the vessel proper. From the principle of the blow-draw-forming process, it is difficult to form a handle integrally with the vessel by draw-blow-forming. Therefore, several proposals have been made on the method of attaching a handle to a draw-blow-formed vessel.

For example, there have been proposed a process in which a handle is formed in advance, the handle is placed in a blow mold, and a vessel-forming preform is draw-blown to prepare a draw-blow-formed vessel having a handle integrated therewith (see Japanese Unexamined Patent Publication No. 56-64948, Japanese Unexamined Patent Publication No. 56-64949 and Japanese Unexamined Patent Publication No. 56-74438), and a process in which a vessel having a handle is prepared by arranging in a rotary manner a station for forming a vessel parison by an infection unit, a station for draw-blow-forming the parison, a station for arranging an injection mold around the formed vessel, applying a pressure to the interior of the vessel and injection-forming a handle by another injection unit and a station for withdrawing the formed vessel having a handle (see Japanese Unexamined Patent Publication No. 62-182044).

In Japanese Unexamined Patent Publication No. 02-32950, we proposed a process for the preparation of a synthetic resin vessel having a handle, which comprises the step of forming a handle provided with an endless grip portion and an endless attachment portion by injection molding of a synthetic resin, the step of inserting the handle in the blow mold, simultaneously placing a parison of a synthetic resin into the blow mold and preparing a vessel proper comprising a neck, a barrel and a closed bottom, a recess being formed on a part of the barrel so that the diameter of a deepest portion of the recess is substantially equal to or slightly larger than the diameter of the neck and a projection being formed substantially at the center of the recess so that an attachment ring is fitted to the projection, and preferably, the step of pressing the projection by a push-in pin while the blow-forming pressure is left in the interior of the vessel proper, to form a flange at the top end of the projection.

This process proposed by us is advantageous in that the handle can be secured to the vessel tightly and assuredly without using a band and a synthetic resin vessel having a handle, which is excellent in appearance, is obtained in a blow-forming split mold at a single stroke. However, inserting the handle into the blow-forming mold is still a problem, and how to perform this operation at a high efficiency without any loss time is not taken into account in this proposal.

In a forming apparatus of the type where a handle is secured to a vessel proper in a blow-forming split mold, since a securing mechanism is built in the split mold, insertion of the handle is especially difficult.

### Summary of the Invention

According to the invention there is provided process for the preparation of a blow-formed or draw-blow-formed synthetic resin vessel having a handle which process comprises;
a) providing a plurality of pairs of split molds circumferentially in a rotary member;
b) inserting a handle formed separately from the vessel proper into a split mold;
c) supplying a parison to the split molds in open state;
d) closing the split molds and blow-forming said parison vessel in the split molds;
e) opening the split molds and withdrawing the obtained vessel having a handle from the split molds;
wherein
f) a handle holding member is arranged rotatably with each pair of split molds, and
g) the handle holding member is reversely turned outwardly of the split molds to receive the supplied handle and hold the handle thereon when the split molds are closed and is turned towards the split molds to supply the handle to the split molds after the split molds have been opened and a vessel having a handle secured thereto taken out.

According to the invention there is further provided apparatus for the preparation of a blow-formed or draw-blow-formed synthetic resin vessel having a handle the apparatus comprising:
i) a plurality of pairs of split molds disposed circumferentially in a rotary member;
ii) means for inserting a handle formed separately from the vessel proper into a split mold;
iii) means for supplying a parison to the split mold in an open state;
iv) bans for closing the split molds and blow-forming the parison in the split molds;
v) means for opening the split mold and withdrawing the obtained vessel (i) having a handle from the split molds wherein the means for inserting a handle comprises a handle holding member arranged rotatably with each pair of split molds and is capable of being reversely turned outward of the split molds to receive a supplied handle and hold the handle thereon when the split molds are closed and
   is capable of being turned towards the split molds to supply the handle to the split molds have been opened and a vessel having a handle secured thereto taken out.

### Brief Description of the Drawings

Figure 1 is a process diagram illustrating the operations of the present invention.

Figure 2 is a side view showing a synthetic resin vessel having a handle according to the present invention.

Figure 3 is a side view illustrating only the vessel proper shown in Figure 1.

Figure 4 is a side view illustrating the vessel proper of Figure 1 in the state rotated by 90°.

Figure 5 is a view showing the section taken along line A-A in Figure 2.

Figure 6 is a view showing the section taken along line B-B in Figure 2.

Figure 7 is a side view illustrating only the handle shown in Figure 1.

Figure 8 is a side view showing the handle of Figure 7 in the state rotated by 270°.

Fig. 9 is a view showing the section taken along line A-A in Fig. 8.

Fig. 10 is a top view showing the entire arrangement of the insert blow-forming apparatus of the present invention.

Fig. 11 is a partially sectional side view showing the blow mold and handle-holding member.

Fig. 12 is a top view of the apparatus shown in Fig. 11.

Fig. 13 is a top view illustrating the handle supply mechanism.

Fig. 14 is a partially sectional side view of the apparatus shown in Fig. 13.

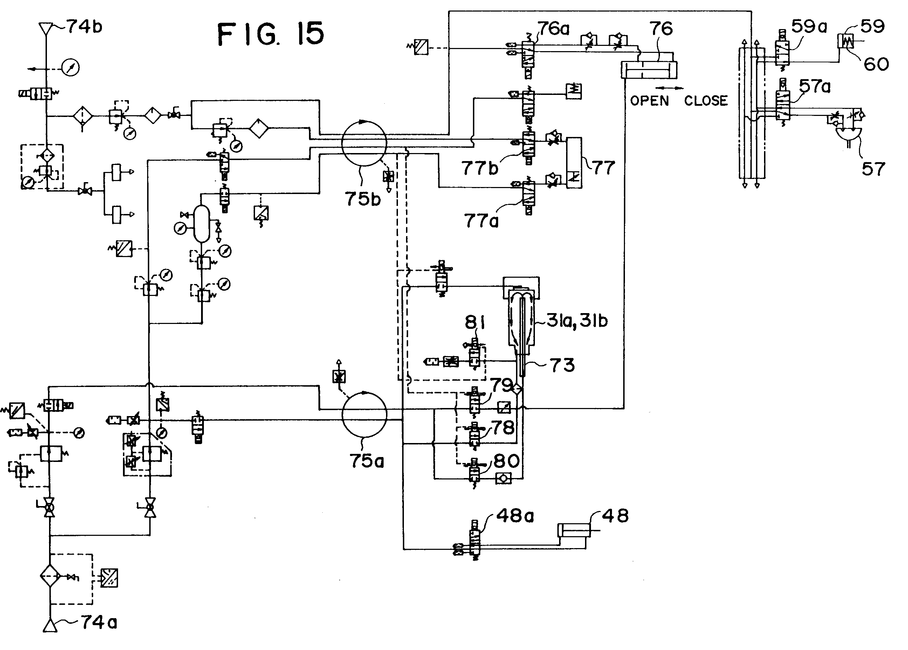

Fig. 15 is a diagram showing the control system for respective members.

### Detailed Description of the Preferred Embodiments

In the process for the preparation of a synthetic resin vessel having a handle according to the present invention, a blow-forming split mold having a handle-inserting cavity and a vessel proper-forming cavity is used. A handle formed separately in advance is inserted into the handle-inserting cavity, a parison is supplied into the vessel proper-forming cavity and blow-forming or draw-blow-forming of the parison is carried out, as in the conventional technique. However, the present invention is prominently characterized in that instead inserting the handle directly in the handle-inserting cavity by a turnable and reversely turnable handle-holding member attached to each blow-forming split mold, there are adopted two operations. That is, supplying the handle into the handle-inserting cavity by the handle-holding member and supplying the handle to the handle-holding member turning reversely outwardly of the blow-forming split mold and in the vicinity thereof during the blow-forming and keeping the handle on standby at this position.

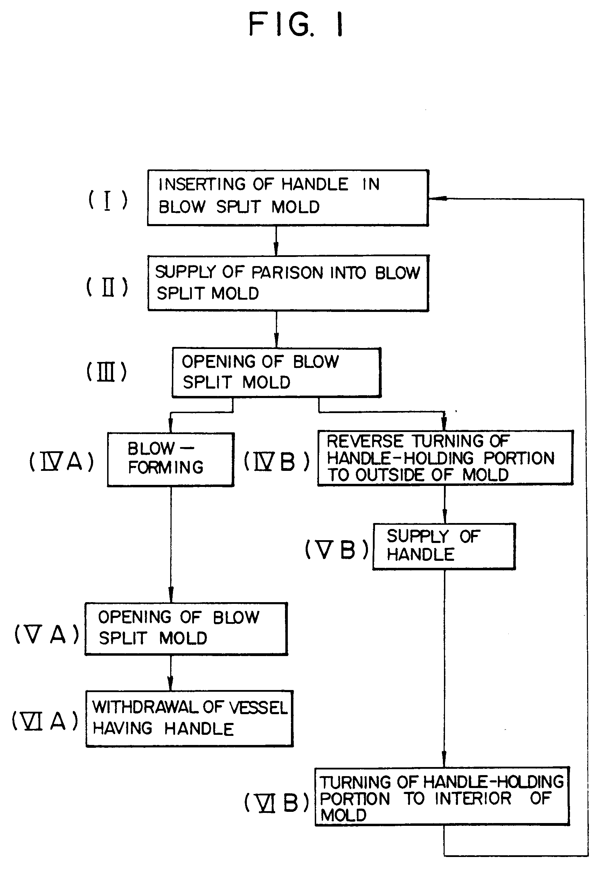

Referring to Fig. 1 illustrating steps of the present invention, at step (1), the handle is inserted in the blow-forming split mold and at next step (2), a parison is supplied into the blow-forming mold and at step (3), the blow-forming mold is closed. A turnable and reversely turnable handle-holding member is arranged in the blow-forming split mold. The blow-forming and the supply of the handle to the handle-holding member are carried out in parallel. More specifically, as shown in the step diagram of Fig. 1, in the blow-forming split mold, blow-forming by blowing a fluid into the parison or blow-draw-forming by stretch-drawing the parison in the axial direction and blowing a fluid into the parison, and fixing of the handle to the vessel, are carried out. At step 5(A), the blow-forming split mold is opened and at step 6(A), the vessel having a handle secured thereto is taken from the mold.

During blow-forming, the handle-holding member is reversely turned outwardly of the split mold and in the vicinity thereof. At step (5B), the handle-holding member receives the supplied handle and is kept on standby while holding the handle thereon. After the split mold is opened and the handle-secured vessel is taken out from the mold, at step (6B), the handle-holding member is turned toward the split mold to supply the handle into the split mold. Then, the above operations are similarly repeated.

In the present invention, since the handle is supplied into the split mold by rotation of the holding member, the supply of the handle can be accomplished assuredly at a high precision in a short time. Furthermore, since the holding member is reversely turned to receive the supplied handle and is kept on standby while the split mold is closed and the blow-forming is carried out, the preparation of a vessel having a handle can be performed smoothly without any time loss. In the vessel having a handle, previously proposed by us, an annular attachment portion is formed on the handle and an attachment portion of the vessel proper is inserted into this ring to expand the top end in the form of a flange and effect fixation between the vessel and handle. In this case, since a mechanism for forming the flange is disposed in the split mold insertion of the handle in the split mold is not easy. In contrast, according to the present invention, since insertion of the handle is performed in the tangential direction by rotation of the handle-holding member, the inserting operation is not disturbed by the flange-forming mechanism and hence, the inserting operation can be performed smoothly.

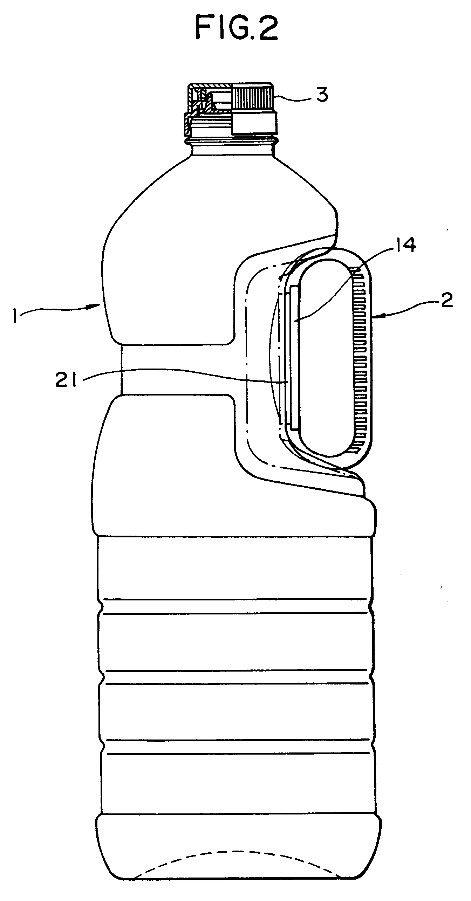

Referring to Fig. 2 illustrating an embodiment of the synthetic resin vessel having a handle according to the present invention, this vessel comprises a vessel proper represented as a whole by reference numeral 1, a handle represented as a whole by reference numeral 2; and a cap 3 is attached to the vessel proper 1.

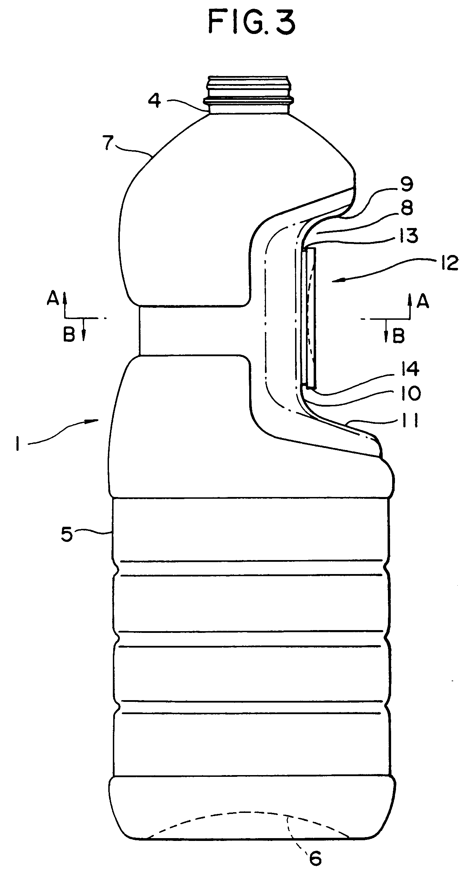

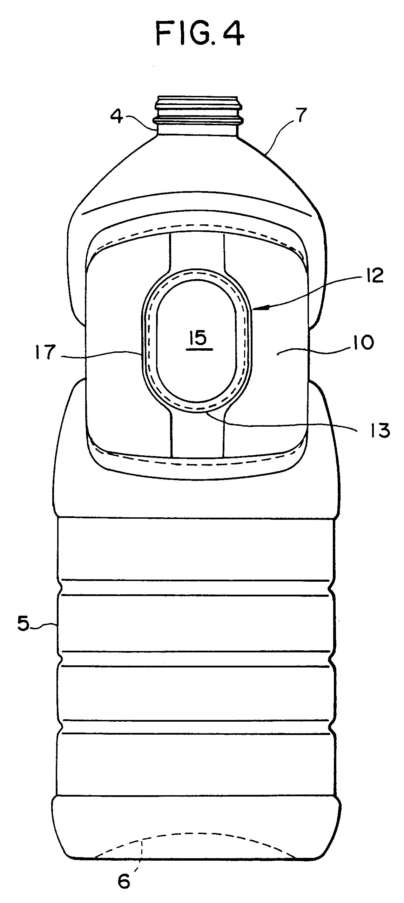

Referring to Figs. 3 through 6, the vessel proper 1 comprises a neck 4, a cylindrical barrel 5 and a closed bottom 6. A conical shoulder 7 is present between the neck 4 and the barrel 5. A recess 8 is formed below this conical shoulder 7. This recess 8 comprises a top face 9 extending slightly slantingly to the center of the vessel when seen from the side face, a side face 10 extending substantially vertically and a bottom face 11 extending slightly slantingly to the side face of the barrel. In the embodiment in the drawings, the recess 8 is formed at a position substantially intermediate between the conical shoulder 7 and the barrel 5 in the height direction. The side face 10 of the recess is formed to have a substantially arcuate shape so that the deepest part of the recess has a diameter (the distance from the axis) substantially equal to or larger than the diameter of the neck 4, when seen in the horizontal section.

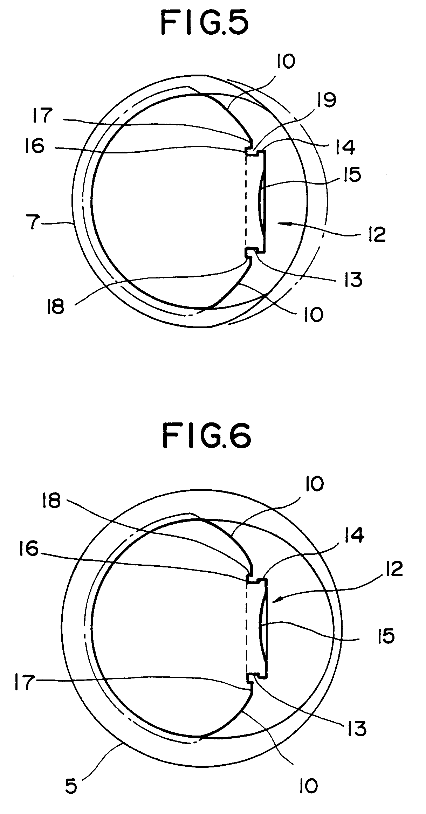

A projection represented as a whole by reference numeral 12 is formed substantially at the center of this recess 8. The projection 12 is formed so that the vertical section thereof has a non-circular shape. In the embodiment shown in the drawings, the vertical section of the projection has an oval shape. However, the shape of the vertical section of the projection 12 is not particularly critical, so far as rotation of the handle is prevented in the state where the projection 12 is combined with the handle described in detail hereinafter. For example, the vertical section of the projection 12 may be ellipsoidal, oblong, triangular, tetragonal, pentagonal and other polygonal shapes. This projection 12 is blow-formed or draw-blow-formed integrally with the recess 8 and other parts of the vessel proper. Projection 12 comprises an outwardly extending small-space cylindrical portion 13, a flange portion 14 arranged at the top end of the cylindrical portion and having a size increasing in the transverse direction, and a top end face 15 closed at the flange portion. The projection 12 has a hollow structure. In the present embodiment, as shown in Figs. 5 and 6, the top end face of the projection is concave so that a flange portion 14 expanding clearly and sufficiently in the transverse direction is formed at the time of formation of the projection 12.

A root face 16 of the projection 12 is formed at a position closer to the axis than part 17 of the concave side face 10 having a smallest diameter (distance from the axis) through step 18. Accordingly, it will be readily understood that a groove 19 is formed between the lower end of the cylindrical portion 13 of the projection 12 and the recess 8 for securing the handle more tightly.

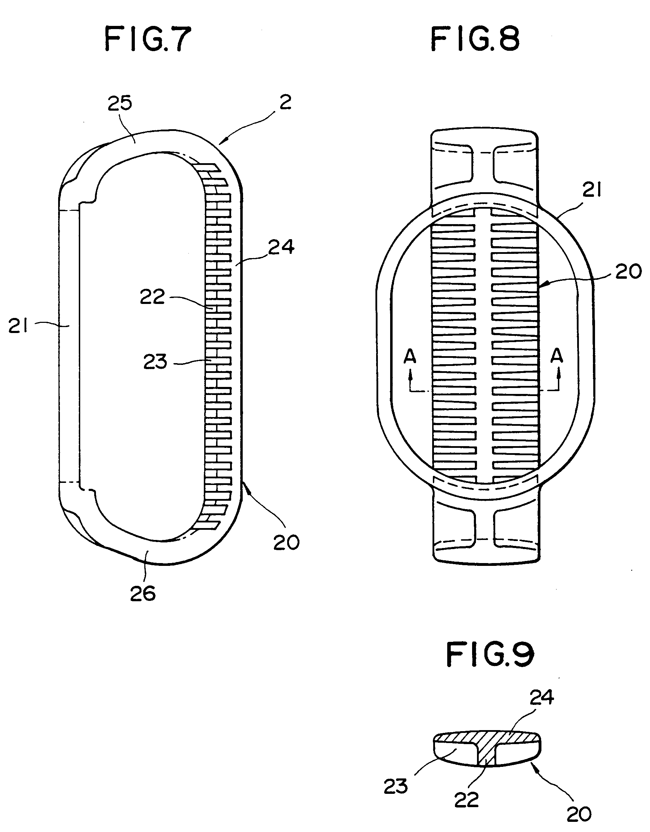

Referring to Figs. 7, 8 and 9 showing the handle of this vessel, this handle 2 comprises an endless grip portion 20 and an endless attachment portion 21, which are integrally prepared by injection forming of a synthetic resin. The grip portion 20 comprises a vertical portion 24 having nonskid convex parts 22 and concave parts 23 arranged alternately at small intervals, an upper curved portion 25 and a lower curved portion 26. The grip portion 20 is connected to an attachment portion 21 through curved portions 25 and 26 to construct a ring as a whole as shown in Fig. 7. As shown in Fig. 8, in the attachment portion 21, also a ring is formed to locate in a plane substantially orthogonal to the plane including the attachment portion 21. The ring of the attachment portion 21 has a shape similar to that of the cylindrical portion 13 of the projection 12 of the vessel proper and an inner circumferential size substantially equal to the peripheral size of the cylindrical portion 13.

Referring to Fig. 2 illustrating the vessel proper combined with the handle, the projection 12 of the vessel proper 1 is inserted into the annular attachment portion 21 and the top end of the projection 12 is expanded to form a flange 14, whereby the annular attachment portion 21 is engaged with the flange 14 and the handle 2 is fixed (in the radial direction) to the vessel proper 1. Where the groove 19 is formed in the root of the projection 12 and the annular attachment portion 21 is contained in this groove 19, fixing of the annular attachment portion 21 is effectively accomplished also in the direction orthogonal to the radial direction and shaking of the attachment portion is prevented. Moreover, since the projection 12 and attachment portion 21 have non-circular shapes, relative rotation between them is effectively prevented.

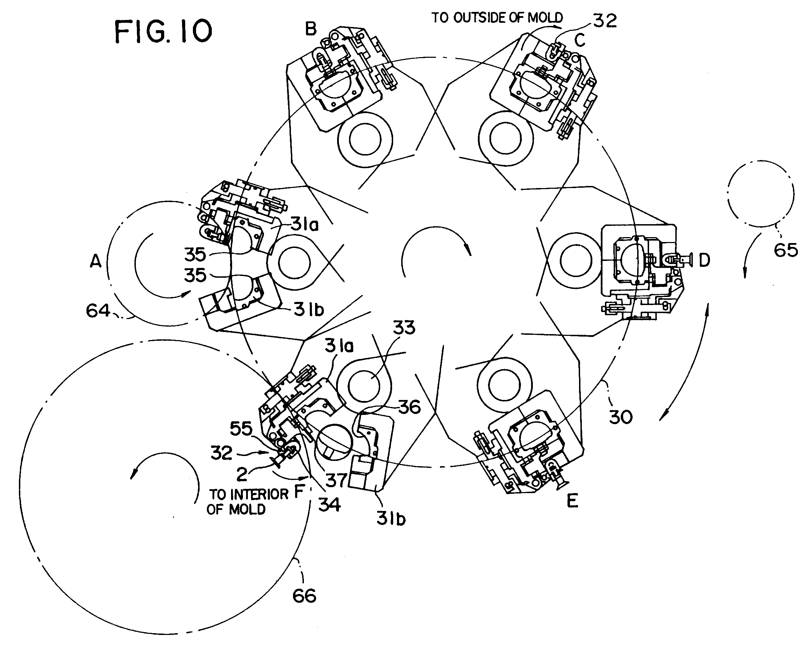

Referring to Fig. 10 illustrating the entire arrangement of an embodiment of the apparatus of the present invention, a rotary member 30 is arranged for rotation in the clockwise direction in the drawings. A plurality of pairs of split molds 31a, 31b, and handle-holding members 32 are arranged circumferentially in the rotary member 30. The split mold 31a, 31b is pivoted on the rotary member 30 through a shaft 33 so that the split mold 31a, 31b can be opened and closed. The handle-holding member 32 is arranged rotatably to one split mold part 31a through a shaft 34.

The split mold 31a, 31b has a parting surface 35 and can be opened and closed through this parting surface 35. The split mold has a handle-inserting cavity 36 and a cavity 37, which are arranged plane-symmetrically with respect to the parting surface 35. This handle-inserting cavity 36 is arranged, for example, in the following manner so that the handle 2 can be secured to the vessel proper 1.

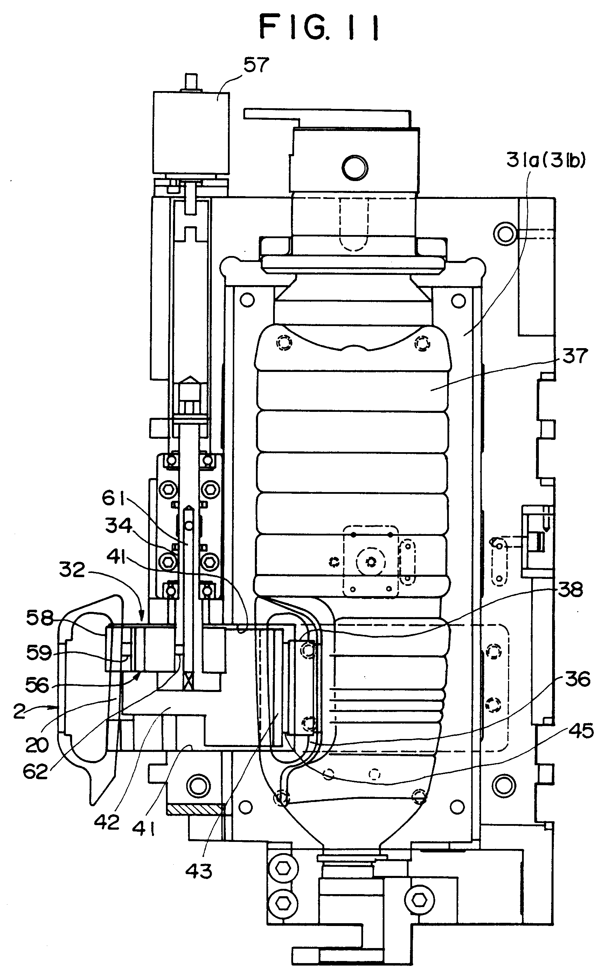

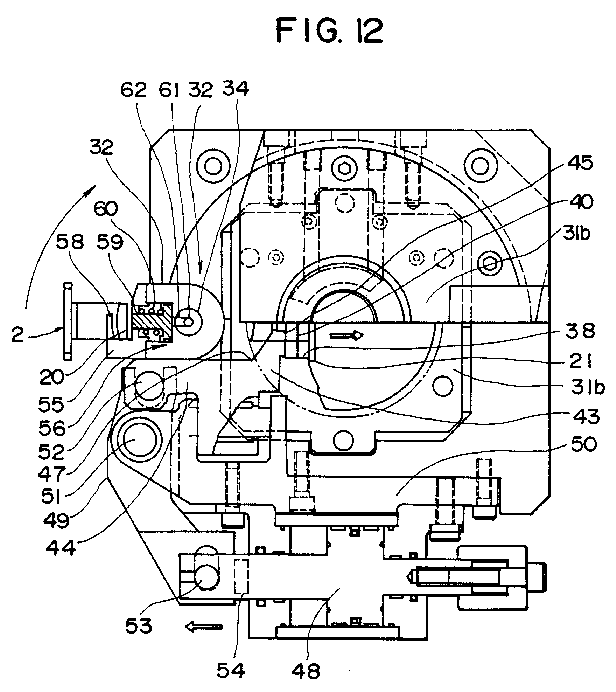

As shown in Figs. 11 and 12, the holding portion 20 and attachment portion 21 of the handle 2 are held by the blow mold 31a, 31b, in a positional relationship described below. small-space cylinder-forming cavity surface 38 is formed to extend through the inner circumference of the annular attachment portion 21 toward both the sides thereof, and a recess-forming cavity surface 40 is formed on the grip side of this cavity surface 38.

A horizontal notch 41 is formed to extend toward the projection-forming cavities 38 and 40 of the blow mold 31a, 31b. A sliding member 42 is arranged in the notch 41 slidably toward these cavities. The sliding member 42 has a supporting arm 43 and a bracket 44, which are arranged separately from each other, and a push-in pin 45 is arranged on the supporting arm 43 on the cavity side. The push-in pin 45 has a shape similar to the flange-forming cavity surface 39 but the peripheral size of the push-in pin 45 is slightly smaller than the inner size of the cavity surface 39, and the top end face of the push-in pin 45 is a convex face. The supporting arm 43 has a notch 47 inhibiting engagement with the holding portion 20 of the handling and is located between the cavity 36 for containing the attachment portion 21 of the handle and the holding portion 20 of the handle. The push-in pin 45 is contiguous with the flange-forming cavity surface 40 so that the cavity surface 40 is substantially closed. The bracket 44 is located outwardly of the holding portion 20 of the handle and at least a part of the bracket 44 is located outwardly of the blow mold 31a, 31b.

A series of driving mechanisms: an electromagnetic solenoid or fluid cylinder mechanism 48 and a link mechanism 49 for transmitting a reciprocating motion of the mechanism 48 to the push-in pin 45, are arranged to drive the push-in pin 45. More specifically, a frame 50 is secured to the other split mold part 31b, and a link or lever 49 is swingably attached to the frame 50 through a fulcrum 45. The bracket 44 is connected to one end of the link or lever 49 through a pivot 52, and the other end of the link or lever 49 is connected to a piston rod 54 of the reciprocating driving mechanism 48 through a pivot 53. Accordingly, when the reciprocating driving mechanism 48 is operated, the link or lever 49 is turned and the sliding member 42 is caused to slide, and the push-in pin 45 is thrust into the flange-forming cavity 40.

Roughly speaking, the handle-holding member 32 comprises a handle-holding portion 55, an opening-closing mechanism 56 for opening and closing the handle-holding portion 55 and a driving mechanism 57 for rotating the handle-holding portion 55. Referring to Figs 11 and 12 illustrating these mechanism in detail, the handle-holding portion 55 has a hook-shaped top end 58 and a piston 59 capable of moving toward this top end 58. The piston 59 is always urged by a spring 60 so that the piston 59 is biased away from the top end 58, and the piston 59 is connected to a fluid pressure source (not shown) through a passage 61 extending vertically along the center of the rotation shaft 34 and a horizontal passage 62 so that when a fluid pressure is applied, the piston is advanced toward the hook-shaped top end 58 to hold the holding portion of the handle and when the fluid pressure is released, the piston 59 retracts to release the holding portion 20 of the handle. Of course, a space for insertion of the holding portion 20 of the handle is formed between the hook-shaped top end 58 and the piston 59, and this space is opened in the turning direction of the handle-holding member 32. A rotary driving mechanism 57 utilizing a fluid pressure is connected to the other end of the rotation shaft 34.

Accordingly, the handle-holding member 32 can be turned and reversely turned between the handle-receiving position on the left side of Fig. 10 and the handle-inserting position on the right side of Fig. 1, and it will be readily understood that the handle can be held and released by actuation of the piston 59.

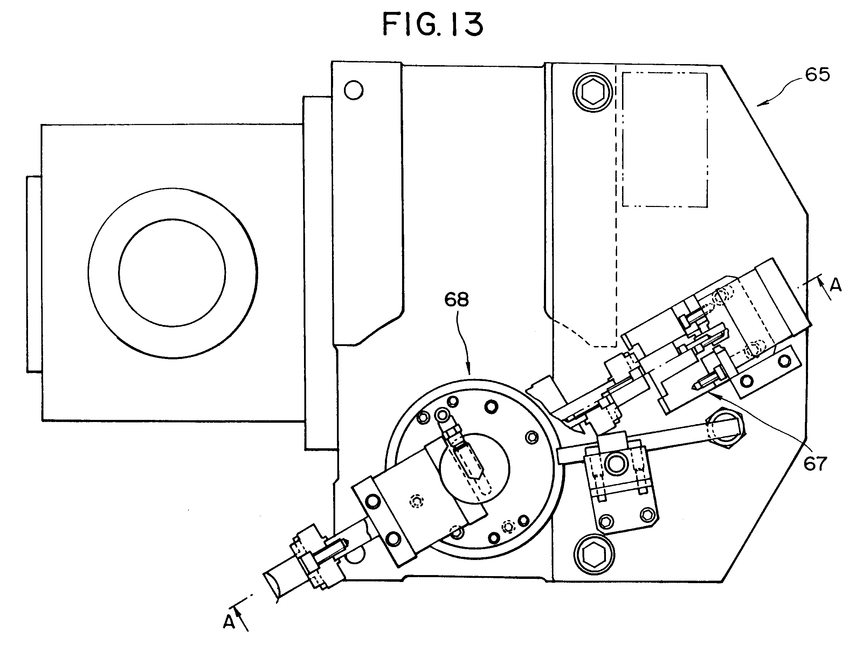

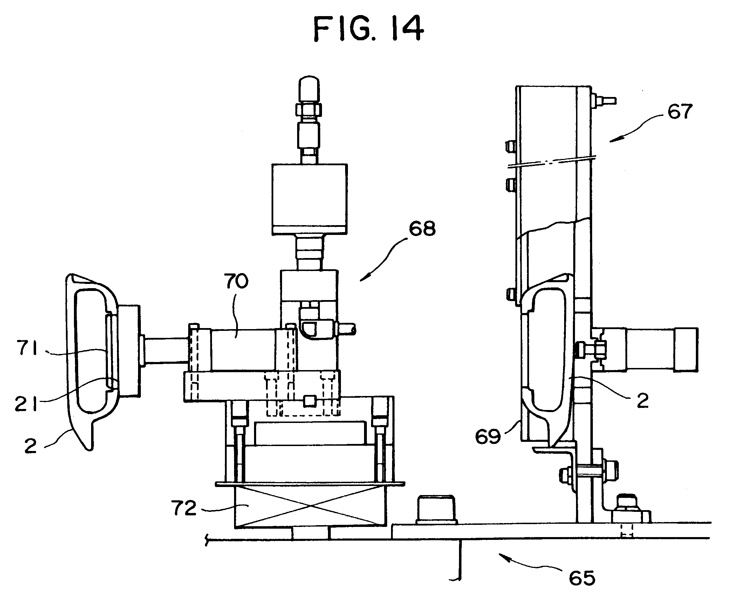

Referring to Fig. 10 again, the rotary member shown has six split molds and six handle-holding members. A parison supply zone A, a handle supply zone D and a handle-secured vessel discharge zone F are arranged around the rotary member 30. A parison supply mechanism 64, a handle supply mechanism 65 and a handle-secured vessel discharge mechanism 66 are arranged in each of these zones. Known mechanisms are used as the parison supply mechanism 64 and handle-secured vessel discharge mechanism 66. Referring to Figs. 13 and 14 illustrating the handle supply mechanism 65 in detail, this handle supply mechanism 65 comprises a stacker 67 for storing the handles and a manipulator 68 for taking out handles contained in the stacker 67 and transporting it to the handle supply position. Handles 2 are piled in a row and stored in this state, and a window 69 for taking out the handle 2 is formed at a lower part of the front face of the stacker 67. The manipulator 68 comprises a cylinder 70 actuated by a fluid pressure and a pick-up pad 71 attached to the top end of the cylinder 70. If this pad 71 is inserted into the annular attachment portion 21 of the handle 2, the handle 2 is held. A rotary driving mechanism or swinging mechanism 72 rotated between the handle attachment position and handle supply position of the stacker 67 is mounted on the manipulator 68.

According to the present invention, as shown in the step diagram of Fig. 1, the split mold 31a, 31b is closed after the passage through the parison supply zone. It is opened before arrival at the handle-secured vessel discharge zone F. The handle-holding portion 55 is operated while the split mold 31a, 31b is opened, so that the handle 2 is inserted into the handle-inserting cavity 36 of one split mold part 31a. The handle-holding portion 55 is then opened and by turning reversely the handle-holding portion 55 to the handle-receiving position before the arrival at the handle supply zone D, closing the handle-holding portion 55 after the receipt of the handle 2 in the handle supply zone, blowing a fluid into the parison while split mold 31a,31b is closed, and blow-forming or draw-blow-forming the parison to a vessel and fixing of the handle to the vessel as shown in Fig. 10.

In an embodiment of the control mechanism for the foregoing operations, shown in Fig. 10, the driving and control of the respective members are performed by utilizing a fluid pressure. At first, the split mold 31a,31b is open and drawing rod 73 is dropped.

The handle-holding member 32 is at the receiving position and kept on standby. Handle 2 is held on the handle-holding portion 55 (see Fig. 10F).

In this state, fluid pressure is applied to a handle-holding member-rotating mechanism 57 through a changeover valve 57a connected to a pressure source 74b through a rotary joint 75b to rotate the handle-holding member 32 to move it to the inserting position in the split mold. Handle 2 is thus inserted into the cavity 36. Then, a valve 59a is actuated and the fluid pressure applied to the piston 59 is released, and the piston 59 is retracted by the spring 60 to release the handle 2 (see Fig. 10A).

In this state, the parison is supplied to the split mold 31a,31b by the parison supply mechanism 64. A changeover valve 76a connected to the pressure source 74b through the rotary joint 75b is changed over and the mold opening-closing mechanism 76 is driven to clamp the split mold 31a,31b (see Fig. 10B). After the clamping of the mold, valves 77a and 77b are changed over and the drawing rod 73 is raised by the cylinder 77 to stretch-draw the parison in the axial direction. Simultaneously, valve 78 is opened and fluid pressure is applied to the interior of the parison to expansion-draw the parison in the circumferential direction. Before the stretch drawing by the drawing rod 73, the parison can be preblown by opening a valve 79 (see Figs. 10B, 10C, 10D and 10E).

After the split mold arrives at position B shown in Fig. 10, the valve 57a is changed over, whereby the handle-holding member-driving mechanism 57 turns the handle-holding member 32 reversely to the handle-receiving and standby position outside the mold, shown in Fig. 10. When the rotary member 30 arrives at position D shown in Fig. 10, the manipulator 68 of the handle supply mechanism 65 shown in Figs. 13 and 14 rotates counterclockwise, whereby the holding portion 20 of the handle 2 held by the manipulator 68 is inserted into the holding portion 55 of the handle-holding member 32. Simultaneously, the valve 59 is opened to advance the piston 59 and hold the handle 2, and the handle-holding standby state is continued to zone F shown in Fig. 10.

The blow split mold 31a,31b is closed over the region of from the zone B to the zone E in Fig. 10. In this region, blow-forming or draw-blow-forming, fixing of the handle to the vessel and cooling for withdrawing the vessel from the mold are carried out. For fixing the handle to the vessel, a valve 48a is opened just after blow-forming or draw-blow-forming, and the flange-forming cylinder 48 is advanced, whereby the push-in pin 45 is thrust into the projecting portion of the handle through the attachment ring 21 to form a flange 14 and effect fixing of the handle. Then, valves 80 and 81 are opened and a cold gas is blown into the vessel to effect cooling for withdrawal.

Finally, before the rotary member 30 reaches the zone F, the valves 77a and 77b are changed over, and the clamping mechanism 77 is reversely driven to open the split mold. The formed vessel 1 having a handle is discharged to the vessel discharge mechanism 66, and then, the foregoing operations are similarly repeated.

In the present invention, the changeover operation of opening and closing the respective valves can be carried out using electromagnetic valves which are opened and closed through limit switches mounted on the rotary member. Alternatively, the valves can be controlled by a computer according to a predetermined time schedule. Of course, cams and the like can be used instead of electromagnetic valves and the changeover operation of opening and closing the valves is then mechanically effected.

Blow-formable resins, especially thermoplastic resins molecularly orientable by drawing, can be optionally used as the resin constituting the vessel proper. For example, there can be mentioned thermoplastic polyesters such as polyethylene terephthalate (PET) and polybutylene terephthalate, polycarbonates, acrylic monomer/butadiene/styrene copolymers (ABS resins), polyacetal resins, nylons such as nylon 6, nylon 6,6 and copolymer nylons thereof, acrylic resins such as polymethyl methacrylate, isotactic polypropylene, and polystyrene. The handle-forming resin may be the same as or different from the resin for the vessel proper. As resins other than those exemplified above, there can be mentioned low-density polyethylene, medium-density polyethylene, high-density polyethylene, an ethylene/propylene copolymer, an ethylene/butene-1 copolymer and a styrene/butadiene thermoplastic elastomer. Of course, various additives such as a colorant and a filler can be incorporated into the handle-forming resin.

In the present invention, blow-forming or draw-blow-forming of a preform for blowing can be carried out according to customary procedures except the above-mentioned characteristic features. For example, a parison for blowing can be obtained by injecting a resin as mentioned above into an injection mold and cooling the injected resin in a super-cooled state (amorphous state). For blow-forming of this parison, the perform can be pre-heated at a drawing temperature, the parison is stretch-drawn in the axial direction in a blow mold and simultaneously, expand-drawn in the circumferential direction. In case of PET, the drawing temperature is generally in the range of from 80 to 130°C.

For injection of the handle-forming resin, a temperature of 180 to 280°C, especially 220 to 260°C, is preferably adopted. The injection pressure for the handle-forming resin is preferably 15 to 45 kg/cm² (gauge), especially preferably 20 to 30 kg/cm² (gauge). In order to prevent deformation of the vessel by the resin injection pressure, a compressed gas is introduced into the vessel at the time of injection of the handle-forming resin. It is preferred that this applied pressure be higher than the resin injection pressure and be in the range of from 20 to 45 kg/cm² (gauge), especially 25 to 35 kg/cm² (gauge). Preferably, the surface of the injection mold is cooled to about 5 to about 20°C.

The foregoing description is directed to one embodiment, but the present invention is by no means limited by this embodiment. For example, instead of the draw-blow-forming blow-forming (blow-melting) can be adopted in which case the forming operation is much easier, as is obvious to those skilled in the art.

As is apparent from the foregoing description, according to the present invention, since the handle is supplied into the split mold from the holding member by rotation of the holding member, the handle can be supplied assuredly at a high precision in a short time. Furthermore, since during the blow-forming when the split mold is closed, the holding member is reversely turned to receive the handle and the holding member is kept on standby, a vessel having a handle can be prepared smoothly without any loss time. In case of the handle-secured vessel previously proposed by us, in which an annular attachment portion is formed on the handle and an attachment portion of a vessel proper is inserted into this ring to expand the top end of the attachment portion in the form of a flange and effect fixation of the handle to the vessel proper, since a flange-forming mechanism is disposed in a split mold, it is not easy to insert the handle into the split mold. In contrast, according to the present invention, since the handle is inserted in the tangential direction by rotation of the handle-holding member, the handle-inserting operation is not disturbed by the flange-forming mechanism but can be smoothly performed.

## Claims

1. A process for the preparation of a blow-formed or draw-blow-formed synthetic resin vessel having a handle which process comprises;
a) providing a plurality of pairs of split molds (31a, 31b) circumferentially in a rotary member (30);
b) inserting a handle (2) formed separately from the vessel proper into a split mold (31);
c) supplying a parison to the split molds (31a, 31b) in open state;
d) closing the split molds (31a, 31b) and blow-forming said parison vessel in the split molds (31a, 31b);
e) opening the split molds (31a, 31b) and withdrawing the obtained vessel (1) having a handle from the split molds (31a, 31b);
characterized in that
f) a handle holding member (32) is arranged rotatably with each pair of split molds (31a, 31b), and
g) the handle holding member (32) is reversely turned outwardly of the split molds (31a, 31b) to receive the supplied handle (2) and hold the handle (2) thereon when the split molds (31a, 31b) are closed and is turned towards the split molds (31a, 31b) to supply the handle to the split molds (31a, 31b) after the split molds (31a, 31b) have been opened and a vessel having a handle secured thereto taken out.

2. A process as claimed in Claim 1, wherein during blow-forming the handle holding member (32) receives a handle (2) for use in a subsequent cycle.

3. Apparatus for the preparation of a blow-formed or draw-blow-formed synthetic resin vessel having a handle the apparatus comprising:
i) a plurality of pairs of split molds (31a, 31b) disposed circumferentially in a rotary member (30);
ii) means for inserting a handle (2) formed separately from the vessel proper into a split mold (31);
iii) means for supplying a parison to the split mold (31a, 31b) in an open state;
iv) means for closing the split molds (31a, 31b) and blow-forming the parison in the split molds (31a, 31b);
v) means for opening the split mold and withdrawing the obtained vessel (i) having a handle from the split molds (31a, 31b)
characterised in that the means for inserting a handle comprises a handle holding member (32) arranged rotatably with each pair of split molds (31a, 31b) and is capable of being reversely turned outward of the split molds (31a, 31b) to receive a supplied handle (2) and hold the handle (2) thereon when the split molds are closed and is capable of being turned towards the split molds (31a, 31b) to supply the handle (2) to the split molds (31a, 31b) after the split molds (31a, 31b) have been opened and a vessel having a handle secured thereto taken out.

4. Apparatus as claimed in Claim 3, wherein the handle holding member (32) comprises a handle holding portion (55) and opening-closing mechanism (56) for opening and closing the handle holding portion (55) and a driving mechanism for rotating the handle-holding portion (55).

5. Apparatus as claimed in Claim 3 or Claim 4, wherein a handle supply mechanism (65) comprising a stacker (67) for storing handles and a manipulator (68) for removing handles from the stacker (67) and transferring them to a handle supply position.

6. Apparatus as claimed in Claim 5, wherein the stacker (67) is provided with a window (69) at a lower part of the front face thereof from which window (69) a handle (2) is removed from a piled row of handles (2), the manipulator comprises a cylinder (70) actuated by fluid pressure with a pick-up pad (71) attached to the top end of the cylinder (70) such that pad (71) is inserted into the annular attachment portion (21) of a handle (2) and a rotary driving mechanism (72) for rotational movement between a handle attachment position and a handle supply position of the stacker (67) is mounted on the manipulator (68).

## Patentansprüche

1. Verfahren zum Herstellen eines blasgeformten oder ziehblasgeformten Kunststoffbehälters mit einem Griff, mit den Stufen
a) Bereitstellen einer Mehrzahl von Paaren von mehrteiligen Formen (31a, 31b), die in einem Drehelement (30) entlang des Umfangs angeordnet sind,
b) Einsetzen eines Griffes (2), der getrennt von dem Behälter gebildet worden ist, in geeigneter Weise in eine mehrteilige Form (31),
c) Zuführen eines Külbels zu den mehrteiligen Formen (31a, 31b) im geöffneten Zustand,
d) Schließen der mehrteiligen Formen (31a, 31b) und Blasformen des Külbel-Behälters in den mehrteiligen Formen (31a, 31b),
e) Öffnen der mehrteiligen Formen (31a, 31b) und Entnehmen des erhaltenen Behälters (1), der einen Griff aufweist, aus den mehrteiligen Formen (31a, 31b),
dadurch gekennzeichnet, daß
f) bei jedem Paar von mehrteiligen Formen (31a, 31b) ein Griff-Halteelement (32) drehbar angeordnet ist und
g) das Griff-Halteelement (32) umkehrbar zur Außenseite der mehrteiligen Formen (31a, 31b) gedreht ist, um den zugeführten Griff (2) aufzunehmen und ihn daran zu halten, wenn die mehrteiligen Formen (31a, 31b) geschlossen werden, sowie zu den mehrteiligen Formen (31a, 31b) hin gedreht ist, um den Griff an die mehrteiligen Formen (31a, 31b) zu übergeben, nachdem diese geöffnet worden sind und ein Behälter mit einem daran befestigten Griff entnommen worden ist.

2. Verfahren nach Anspruch 1, worin während des Blasformens das Griff-Halteelement (32) einen Griff (2) zur Verwendung in einem nachfolgenden Zyklus aufnimmt.

3. Vorrichtung zur Herstellung eines blasgeformten oder ziehblasgeformten Kunststoffbehälters mit einem Griff, gekennzeichnet durch
i) eine Mehrzahl von Paaren von mehrteiligen Formen (31a, 31b), die in einem Drehelement (30) entlang des Umfangs angeordnet sind,
ii) Mittel zum Einsetzen eines Griffs (2), der getrennt von dem Behälter gebildet worden ist, in geeigneter Weise in eine mehrteilige Form (31),
iii)Mittel zum Zuführen eines Külbels zu den mehrteiligen Formen (31a, 31b) in geöffnetem Zustand,
iv) Mittel zum Schließen der mehrteiligen Formen (31a, 31b) und Blasformen des Külbels in den mehrteiligen Formen (31a, 31b),
v) Mittel zum Öffnen der mehrteiligen Formen und zum Entnehmen des erhaltenen Behälters (i), der einen Griff aufweist, aus den mehrteiligen Formen (31a, 31b),
dadurch gekennzeichnet, daß die Mittel zum Einsetzen eines Griffes bei jedem Paar von mehrteiligen Formen (31a, 31b) ein drehbar angeordnetes Griff-Halteelement (32) aufweisen und in der Lage sind, umkehrbar zur Außenseite der mehrteiligen Formen (31a, 31b) hin gedreht zu werden, um einen zugeführten Griff (2) aufzunehmen und ihn daran zu halten, wenn die mehrteiligen Formen geschlossen sind, und in der Lage sind, gegen die mehrteiligen Formen (31a, 31b) hin gedreht zu werden, um den Handgriff (2) an die mehrteiligen Formen (31a, 31b) zu übergeben, nachdem diese geöffnet worden sind und ein Behälter mit einem daran befestigten Griff entnommen worden ist.

4. Vorrichtung nach Anspruch 3, worin das Griff-Halteelement (32) einen Griff-Halteabschnitt (55) und einen Öffnungs- und Schließmechanismus (56) zum Öffnen und Schließen des Griff-Halteabschnitts (55) sowie einen Antriebsmechanismus zum Drehen des Griff-Halteabschnitts (55) aufweist.

5. Vorrichtung nach Anspruch 3 oder 4, die einen Griff-Zuführungsmechanismus (65) mit einer Stapelvorrichtung (67) zum Unterbringen von Griffen und einem Manipulator (68) zum Entnehmen von Griffen aus der Stapelvorrichtung (67) und Überführen derselben zu einer Griff-Zuführungsposition aufweist.

6. Vorrichtung nach Anspruch 5, worin die Stapelvorrichtung (67) an einem unteren Teil ihrer Vorderseite mit einem Fenster (69) versehen ist, von dem ein Handgriff (2) aus einer gestapelten Reihe von Griffen (2) entnommen wird, der Manipulator mit einem Zylinder (70) ausgerüstet ist, der durch Fluiddruck in Betrieb gesetzt wird und an dessen Vorderende ein Aufnahmekissen (71) derart befestigt ist, daß das Kissen (71) in den ringförmigen Befestigungsbereich (21) eines Griffes (2) eingesetzt wird, und an dem Manipulator (68) ein Drehantriebsmechanismus (72) zur Drehbewegung zwischen einer Griff-Befestigungsposition und einer Griff-Zuführungsposition der Stapelvorrichtung (67) befestigt ist.

## Revendications

1. Procédé de fabrication d'un récipient en résine synthétique formé par soufflage ou par étirage-soufflage, muni d'une poignée, ledit procédé comprenant les étapes consistant à:
a) installer une pluralité de paires de moules scindés (31a, 31b) circonférenciellement dans un élément rotatif (30);
b) insérer une poignée (2), formée séparément du récipient proprement dit, dans un moule scindé (31);
c) déposer une paraison dans les moules scindés (31a, 31b) en position ouverte;
d) fermer les moules scindés (31a, 31b) et former le récipient par soufflage de ladite paraison dans les moules scindés (31a, 31b);
e) ouvrir les moules scindés (31a, 31b) et retirer le récipient obtenu (1), muni d'une poignée, des moules scindés (31a, 31b);
caractérisé par le fait que
f) un élément de support de poignée (32) est agencé en vue de pouvoir tourner avec chaque paire de moules scindés (31a, 31b); et
g) l'élément de support de poignée (32) est tourné en sens inverse vers l'extérieur des moules scindés (31a, 31b) pour recevoir la poignée (2) fournie et porter la poignée (2) pendant que les moules scindés (31a, 31b) sont fermés, et est tourné vers les moules scindés (31a, 31b) pour insérer la poignée dans les moules scindés (31a, 31b) après que les moules scindés (31a, 31b) ont été ouverts et qu'un récipient muni d'une poignée en a été retiré.

2. Procédé selon la revendication 1, dans lequel, pendant le formage par soufflage, l'élément de support de poignée (32) reçoit une poignée (2) destinée à être utilisée dans un cycle subséquent.

3. Appareil pour la préparation d'un récipient en résine synthétique formé par soufflage ou par étirage-soufflage, muni d'une poignée, l'appareil comprenant:
i) une pluralité de paires de moules scindés (31a, 31b) disposés circonférenciellement dans un élément rotatif (30);
ii) un moyen pour insérer une poignée (2), formée séparément du récipient proprement dit, dans un moule scindé (31);
iii) un moyen pour déposer une paraison dans le moule scindé (31a, 31b) ouvert;
iv) un moyen pour fermer les moules scindés (31a, 31b) et former par soufflage la paraison dans les moules scindés (31a, 31b);
v) un moyen pour ouvrir le moule scindé et retirer le récipient obtenu (1), muni d'une poignée, des moules scindés (31a, 31b);
caractérisé par le fait que le moyen pour insérer une poignée comprend un élément de support de poignée (32), agencé de manière à pouvoir tourner avec chaque paire de moules scindés (31a, 31b) et capable d'être tourné en sens inverse vers l'extérieur des moules scindés (31a, 31b) pour recevoir une poignée (2) fournie et porter la poignée (2) pendant que les moules scindés sont fermés et capable d'être tourné vers les moules scindés (31a, 31b) pour insérer la poignée (2) dans les moules scindés (31a, 31b), après que les moules scindés (31a, 31b) ont été ouverts et qu'un récipient muni d'une poignée en a été retiré.

4. Appareil selon la revendication 3, dans lequel l'élément de support de poignée (32) comprend une partie de support de poignée (55), un mécanisme d'ouverture-fermeture (56) destiné à ouvrir et à fermer la partie de support de poignée (55) et un mécanisme d'entraînement pour faire tourner la partie de support de poignée (55).

5. Appareil selon la revendication 3 ou 4, comprenant en outre un mécanisme d'alimentation en poignées (65) comprenant un empileur (67) pour stocker des poignées et un manipulateur (68) pour retirer les poignées de l'empileur (67) et les transférer en position d'alimentation en poignée.

6. Appareil selon la revendication 5, dans lequel l'empileur (67) est muni d'une fenêtre (69) au niveau d'une partie inférieure de sa surface avant, une poignée (2) étant retirée par ladite fenêtre (69) d'une rangée de poignées (2) empilées, le manipulateur comprend un cylindre (70) actionné par la pression d'un fluide avec un patin récupérateur (71) attaché à l'extrémité supérieure du cylindre (70), de sorte que le patin (71) est inséré dans la partie de fixation annulaire (21) d'une poignée (2), et un mécanisme d'entraînement rotatif (72) est monté sur le manipulateur (68) en vue d'avoir un mouvement de rotation entre une position de fixation de poignée et une position d'alimentation en poignée par l'empileur (67).
